(19) Europäisches Patentamt
European Patent Office
Office européen des brevets

(11) **EP 4 567 609 A1**

(12) **EUROPEAN PATENT APPLICATION**
published in accordance with Art. 153(4) EPC

(43) Date of publication:
**11.06.2025 Bulletin 2025/24**

(21) Application number: **23869823.7**

(22) Date of filing: **29.06.2023**

(51) International Patent Classification (IPC):
**G06F 12/1009** (2016.01)     **G06F 12/1027** (2016.01)

(52) Cooperative Patent Classification (CPC):
**G06F 12/1009; G06F 12/1027; G06F 16/22**

(86) International application number:
**PCT/CN2023/103831**

(87) International publication number:
**WO 2024/066575 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022   CN 202211180232
14.11.2022   CN 202211431336**

(71) Applicant: **Huawei Technologies Co., Ltd.
Shenzhen, Guangdong 518129 (CN)**

(72) Inventors:
• **JIN, Yao
Shenzhen, Guangdong 518129 (CN)**
• **WU, Fengguang
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **METHOD AND DEVICE FOR DISTINGUISHING COLD AND HOT PHYSICAL PAGES, AND CHIP AND STORAGE MEDIUM**

(57)    This application relates to the field of storage technologies, and provides a cold/hot physical page identification method and apparatus, a chip, and a storage medium. The method includes: obtaining a plurality of access identifiers of a physical page in a first storage medium in different time periods from an access record table associated with the first storage medium; and performing cold/hot identification on each physical page based on the plurality of access identifiers of the physical page. In this way, a cold page and a hot page in the first storage medium do not need to be identified by scanning a page table, and the page table does not need to be locked. Therefore, the method does not affect a process of accessing the first storage medium by an application program, and improves efficiency of accessing the storage medium by the application program.

FIG. 2

**Description**

This application claims priority to Chinese Patent Application No. 202211180232.0, filed on September 26, 2022 and entitled "MEMORY PAGE HOT DEGREE IDENTIFICATION METHOD", which is incorporated herein by reference in its entirety.

This application claims priority to Chinese Patent Application No. 202211431336.4, filed on November 14, 2022 and entitled "COLD/HOT PHYSICAL PAGE IDENTIFICATION METHOD AND APPARATUS, CHIP, AND STORAGE MEDIUM", which is incorporated herein by reference in its entirety.

**TECHNICAL FIELD**

This application relates to the field of storage technologies, and in particular, to a cold/hot physical page identification method and apparatus, a chip, and a storage medium.

**BACKGROUND**

A memory of an electronic device generally includes a plurality of physical pages. A physical page frequently accessed by an application program is a hot page, and a physical page not frequently accessed by the application program is a cold page. An operating system of the electronic device performs cold/hot identification on the physical pages in the memory, to identify the cold page and the hot page in the memory, and then performs data migration on the cold page and the hot page in the memory, to improve overall performance of the electronic device.

Currently, a cold/hot physical page identification process includes: The operating system locks a page table (page table) of the memory, and then scans an accessed (accessed) bit (bit) in a page table entry in the page table. If an accessed bit is 1, it is determined that a physical page corresponding to the accessed bit is a hot page; or if an accessed bit is 0, it is determined that a physical page corresponding to the accessed bit is a cold page. After the entire page table is scanned, the page table is unlocked.

In a process of running the application program, a processor in the electronic device needs to continuously query the page table to determine a physical address of a physical page to be accessed by the application program, and then access the physical page in the memory based on the found physical address. However, in the foregoing cold/hot physical page identification process, the page table needs to be locked, and the processor needs to wait for the page table to be unlocked before continuing to query the page table. This increases a duration for the application program to access the memory, and reduces efficiency of accessing the memory by the application program.

**SUMMARY**

This application provides a cold/hot physical page identification method and apparatus, a chip, and a storage medium, to improve efficiency of accessing a storage medium by an application program.

According to a first aspect, a cold/hot physical page identification method is provided. The method includes: first obtaining a plurality of access identifiers of a physical page in a first storage medium from an access record table associated with the first storage medium; and then performing cold/hot identification on the physical page based on the plurality of access identifiers, to identify whether the physical page is a cold page or a hot page. The plurality of access identifiers of the physical page respectively indicate statuses of accessing the physical page by an application program in a plurality of different time periods.

In the method, the plurality of access identifiers of the physical page in the first storage medium in different time periods are obtained from the access record table associated with the first storage medium, and cold/hot identification is performed on each physical page based on the plurality of access identifiers of the physical page. In this way, a cold page and a hot page in the first storage medium do not need to be identified by scanning a page table, and the page table does not need to be locked. Therefore, the method does not affect a process of accessing the first storage medium by the application program, and improves efficiency of accessing the storage medium by the application program.

In a possible implementation, the access identifier of the physical page includes a first access identifier or a second access identifier, the first access identifier indicates that the application program has accessed the physical page in a corresponding time period, and the second access identifier indicates that the application program has not accessed the physical page in a corresponding time period. Based on this, the foregoing process of performing cold/hot identification on the physical page based on the plurality of access identifiers includes: if the plurality of access identifiers of the physical page are all first access identifiers, identifying the physical page as a hot page; or if the plurality of access identifiers are all second access identifiers, identifying the physical page as a cold page.

Based on the foregoing possible implementation, the statuses of accessing the physical page by the application program in a plurality of time periods are recorded by using the plurality of access identifiers of the physical page. If the plurality of access identifiers are all the first access identifiers, it indicates that the application program has accessed the physical page in the plurality of time periods, and the physical page is a physical page frequently accessed by the application program, the physical page is identified as a hot page. If the plurality of access identifiers are all the second access identifiers, it indicates that the application program has not accessed the physical page in the plurality of time periods, and the physical page is a physical page not frequently accessed by the application program, the physical page is identified as a cold page. This can accurately identify whether the physical page is a hot page or a cold page by using the plurality of access identifiers of the physical page.

In another possible implementation, after the obtaining a plurality of access identifiers of a physical page in a first storage medium from an access record table associated with the first storage medium, the method further includes the following steps: if a first access identifier exists in the plurality of access identifiers of the physical page, determining the physical page as a target physical page; and determining a working set size WSS of the application program based on a quantity of target physical pages in the first storage medium.

Based on the foregoing possible implementation, statistics about the working set size of the application program can be further collected based on the plurality of access identifiers of the physical page in the first storage medium, to meet a requirement of an application scenario for collecting the statistics about the working set size of the application program.

In another possible implementation, the foregoing process of obtaining a plurality of access identifiers of a physical page in a first storage medium from an access record table associated with the first storage medium includes: obtaining an access identifier of the physical page from the access record table at an interval of one time period.

In another possible implementation, the access record table includes an access field associated with the physical page, and after the obtaining an access identifier of the physical page from the access record table at an interval of one time period, the method further includes:
refreshing an access identifier in the access field to the second access identifier, where the second access identifier indicates that the application program has not accessed the physical page in a corresponding time period.

Based on the foregoing possible implementation, after an access identifier of the physical page in a current time period is read, the access identifier of the access field of the physical page is refreshed to the second access identifier, if the application program has not accessed the physical page in a next time period, it is avoided that a first access identifier is read from the access field after the next time period. In this way, the access identifier of the physical page in each time period can be accurately recorded.

In another possible implementation, the access field is a bit, or the access field includes a plurality of access subfields, and the access subfield is used to store a status of accessing the physical page by the application program in a corresponding time period.

In another possible implementation, the access record table includes an access field associated with the physical page, and the method further includes the following steps: if an access request of the application program for the physical page is obtained, querying a translation lookaside buffer TLB of the first storage medium for a page table entry of the physical page; and if no page table entry is found, storing a first access identifier in an access field in the access record table, where the first access identifier indicates that the application program has accessed the physical page in a corresponding time period.

Based on the foregoing possible implementation, a process in which the application program accesses the physical page to query the page table triggers recording of the access identifier of the physical page in the access record table, so that the method can be applicable to an access mechanism of the application program, and implementation is simple.

In another possible implementation, after the querying a translation lookaside buffer TLB of the first storage medium for a page table entry of the physical page, the method further includes the following steps: if no page table entry is found, querying the page table of the first storage medium for the page table entry, and in a process of querying the page table, performing the step of storing a first access identifier in an access field in the access record table.

Based on the foregoing possible implementation, a process of querying the page table and a process of recording the access identifier in the access record are concurrently performed, to avoid an additional processing delay generated in a process of accessing the physical page by a processor based on the access request.

In another possible implementation, the access record table is associated with first storage space in the first storage medium, and the foregoing process of obtaining a plurality of access identifiers of a physical page in a first storage medium from an access record table associated with the first storage medium includes: obtaining a plurality of access identifier sequences of the first storage space from the access record table, where the plurality of access identifier sequences respectively indicate statuses of accessing each physical page in the first storage space by the application program in a plurality of different time periods. Correspondingly, the foregoing process of performing cold/hot identification on the physical page based on the plurality of access identifiers includes: performing cold/hot identification on each physical page in the first storage space based on the plurality of access identifier sequences.

Based on the foregoing possible implementation, cold/hot identification can be performed in the first storage space allocated to the application program, to identify a hot page and/or a cold page in the first storage space, and the cold page and the hot page in the first storage space do not need to be identified by scanning a page table, and the page table does not need to be locked. Therefore, a process of accessing the first storage space by the application program is not affected, and efficiency of accessing the first storage space by the application program is improved.

In another possible implementation, the access record table is stored in a second storage medium, and at least one of a storage address or a size of the access record table is stored in a processor that runs the application program.

According to a second aspect, a cold/hot physical page identification apparatus is provided. The apparatus includes modules configured to perform the cold/hot physical page identification method in any one of the first aspect or the possible implementations of the first aspect.

According to a third aspect, a chip is provided. The chip is configured to implement operation steps of the cold/hot physical page identification method in any one of the first aspect or the possible implementations of the first aspect.

According to a fourth aspect, a computer-readable storage medium is provided. The storage medium stores at least one piece of program code, and the program code is read by a processor, so that a chip performs operation steps of the foregoing cold/hot physical page identification method.

According to a fifth aspect, a computer program product or a computer program is provided. The computer program product or the computer program includes program code, the program code is stored in a computer-readable storage medium, a processor of a chip reads the program code from the computer-readable storage medium, and the processor executes the program code, so that the chip performs the method provided in the first aspect or the optional implementations of the first aspect.

In this application, the implementations according to the foregoing aspects may be further combined to provide more implementations.

## BRIEF DESCRIPTION OF DRAWINGS

FIG. 1 is a diagram of an electronic device to which a cold/hot physical page identification method is applied according to this application;
FIG. 2 is a flowchart of a cold/hot physical page identification method according to this application;
FIG. 3 is a flowchart of another cold/hot physical page identification method according to this application;
FIG. 4 is a flowchart of another cold/hot physical page identification method according to this application;
FIG. 5 is a diagram of a computing logic principle of cold/hot physical page identification according to this application;
FIG. 6 is a diagram of a structure of a cold/hot physical page identification apparatus according to this application; and
FIG. 7 is a diagram of a structure of a chip according to this application.

## DESCRIPTION OF EMBODIMENTS

To reduce impact of a cold/hot identification process on access to a storage medium by an application program, this application provides a cold/hot physical page identification method. In the method, access identifiers of each physical page in different time periods in the storage medium are recorded by using an access record table associated with the storage medium. Each access identifier indicates a status of accessing a physical page by the application program in a time period. In this way, a plurality of access identifiers of each physical page in different time periods can be obtained from the access record table, and cold/hot identification is performed on each physical page based on the plurality of access identifiers of each physical page. Therefore, a cold page and a hot page in the storage medium do not need to be identified by scanning a page table, and the page table does not need to be locked. Therefore, the method does not affect a process of accessing the storage medium by the application program, and improves efficiency of accessing the storage medium by the application program.

With reference to the accompanying drawings, the following further describes in detail the cold/hot physical page identification method provided in this application.

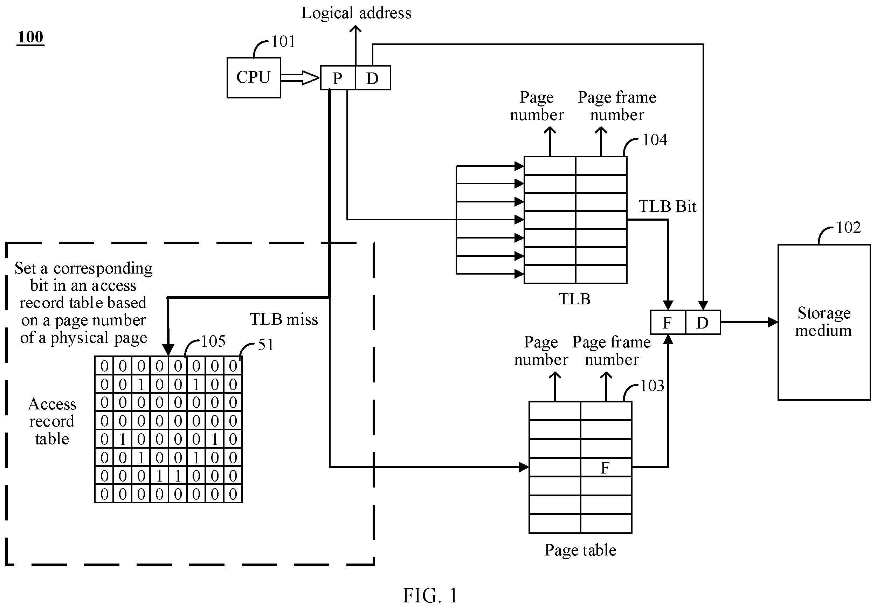

FIG. 1 is a diagram of an electronic device to which a cold/hot physical page identification method is applied according to this application. Refer to FIG. 1. The electronic device 100 includes a processor 101 and a storage medium 102. There is at least one processor 101 and at least one storage medium 102 in the electronic device 100. For ease of description, one processor 101 and one storage medium 102 are used as an example in FIG. 1. A quantity of processors 101 and a quantity of storage media 102 in the electronic device 100 are not limited in this embodiment of this application.

As shown in FIG. 1, the processor 101 may be a central processing unit (central processing unit, CPU). Certainly, the processor 101 may alternatively be implemented in at least one hardware form of an application-specific integrated circuit (application-specific integrated circuit, ASIC), a digital signal processor (digital signal processor, DSP), a field programmable gate array (field programmable gate array, FPGA), or a programmable logic array (programmable logic array, PLA). Certainly, the processor 101 may alternatively be implemented in another hardware form. This is not limited in embodiments of this application. In some embodiments, the processor 101 may alternatively be implemented by using a graphics processing unit (graphics processing unit, GPU), a system on chip (system on chip, SoC), or a data processing unit (data processing unit, DPU). The GPU is configured to be responsible for rendering and drawing content that needs to be displayed on a display screen. In some embodiments, the processor 101 further includes an artificial intelligence (artificial intelligence, AI) processor, and the AI processor is configured to process a computing operation related to machine learning.

The storage medium 102 may be a solid-state drive (solid-state drive, SSD), a double rate synchronous dynamic random access memory (double data Rate SDRAM, DDR), a persistent memory (persistent memory, PMEM)/static random access high bandwidth memory (high bandwidth memory, HBM), a phase change memory (phase change memory, PCM), a magnetic random access memory (magnetic random access memory, MRAM), or a static random access memory (static random access memory, SRAM). The storage medium 102 may alternatively have another product form. A product type of the storage medium 102 is not limited herein in embodiments of this application.

The storage medium 102 includes a plurality of physical pages, and the physical page is used to store data (for example, program code or service data). Each physical page has a page number and a page frame number, and both the page number and the page frame number indicate a physical page. As shown in FIG. 1, an operating system (operating system, OS) of the electronic device records the page number (page number) and the page frame number (frame number) of each physical page in the storage medium 102 by using a page table (page table) 103. As shown in FIG. 1, the page table 103 includes a plurality of page table entries, and each page table entry is used for a page number and a page frame number of one physical page in the storage medium 102.

In some embodiments, as shown in FIG. 1, the processor 101 stores a cache of the page table 103: a translation lookaside buffer (translation lookaside buffer, TLB) 104. The TLB 104 is configured to cache the page table entry in the page table, for example, cache a page table entry that is in the page table and that is of a physical page accessed by the application program in a current time period. As shown in FIG. 1, in a process of running an application program, the processor 101 accesses storage space indicated by a logical address (logical address). For example, the logical address includes a page number P and a page offset D of a to-be-accessed physical page. The processor 101 queries the TLB 104 for a page table entry including the page number P. If the page table entry is found in the TLB 104, a TLB hit (TLB hit) occurs on the to-be-accessed physical page, and the processor 101 accesses, by using a page frame number F and the page offset D in the found page table entry as a physical address, storage space indicated by the physical address in the storage medium 102. If the page table entry including the page number P is not found in the TLB 104, a TLB miss (TLB miss) occurs on the to-be-accessed physical page, and the processor 101 queries the page table 103 for the page table entry including the page number P, and accesses, by using a page frame number F and the page offset D in the page table entry as a physical address, storage space indicated by the physical address in the storage medium 102, for example, writes data into the storage space or reads data from the storage space. In addition, if the TLB miss occurs on the to-be-accessed physical page, the processor 101 loads, to the TLB 104, the page table entry found in the page table 103, so that when the physical page is accessed next time, the page frame number F of the physical page is obtained by querying the TLB.

As shown in FIG. 1, the storage medium 102 is further associated with an access record table 105. The access record table 105 includes a plurality of access fields 51. Each access field corresponds to one physical page in the storage medium 102. Each access field 51 is used to store an access identifier of a corresponding physical page. The access identifier indicates a status of accessing the physical page by the application program in a time period. The access identifier is a first access identifier or a second access identifier. The first access identifier indicates that the application program has accessed the physical page in the time period, and the second access identifier indicates that the application program has not accessed the physical page in the time period. As shown in FIG. 1, to distinguish between the first access identifier and the second access identifier, the first access identifier is 1, and the second access identifier is 0. In some other embodiments, the first access identifier is 0, and the second access identifier is 1. In this embodiment of this application, representation manners for the first access identifier and the second access identifier are not limited, provided that the first access identifier and the second access identifier can be distinguished.

In a possible implementation, the access record table 105 is a bitmap (bitmap), the access field 51 is a bit, and each bit corresponds to a page number of one physical page in the storage medium 102. For example, a 1st bit in the access record table corresponds to a page number 1, a 2nd bit corresponds to a page number 2, and so on. If the TLB miss occurs when the application program accesses a physical page in the storage medium 102, the processor 101 sets a corresponding bit in the access record table to the first access identifier (for example, 1) based on a page number of the physical page, so that the processor 101 subsequently reads an access identifier of each physical page from the access record table 105, and performs, based on the read access identifier, the cold/hot physical page identification method provided in this application.

In some embodiments, the cold/hot physical page identification method provided in this application is implemented by using an identification device, and the identification device is implemented by using software, hardware, or a combination of software and hardware. As an example of a software functional unit, the identification device includes code running on a computing instance. The computing instance includes at least one of a virtual machine or a container. Further, there may be one or more computing instances. For example, the identification device includes code running on a plurality of virtual machines/containers. In addition, the plurality of virtual machines/containers configured to run the code may be distributed in a same region (region), or may be distributed in different regions. Further, the plurality of virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

When the identification device is implemented by using the code running on the computing instance, the plurality of virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. Interconnection between VPCs is implemented through the communication gateway.

As an example of a hardware functional unit, the identification device may be a device implemented by using an application-specific integrated circuit (application-specific integrated circuit, ASIC), a device implemented by using a programmable logic device (programmable logic device, PLD), or the like. The PLD may be implemented by using a complex program logic device (complex programmable logic device, CPLD), a field programmable gate array (field programmable gate array, FPGA), a generic array logic (generic array logic, GAL), a data processing unit (data processing unit, DPU), a system on chip (system on chip, SoC), or any combination thereof.

In addition, the physical page identification method provided in this application may be applied to any application scenario in which there is a cold/hot identification requirement for a physical page in a storage medium. The application scenario is, for example, a database scenario: When a storage medium (for example, a memory) associated with a database is insufficient to store all data or costs of storing all data in the storage medium are excessively high, a hot page and a cold page in the storage medium are identified by using the method, data (namely, hot data) in the hot page of the storage medium is reserved, occupation of data (namely, cold data) in the cold page is reduced through compression, and the cold data is even migrated to a cheaper storage device (for example, an SSD or a hard disk drive). The application scenario is, for another example, a storage scenario: A hot page and a cold page in a storage medium are identified by using the method, hottest data is stored in a memory, second hottest data is stored in an SSD, second coldest data is stored in a mechanical hard disk drive, and coldest data is stored in a tape. The application scenario is, for another example, a heterogeneous memory system: The heterogeneous memory system includes a DDR and a PMEM. A hot page and a cold page in the DDR and the PMEM are identified by using the method, data in the hot page of the PMEM is migrated to the DDR, data in the cold page is stored in the PMEM, data in the hot page of the DDR is stored in the DDR, and data in the cold page is migrated to the PMEM, so that cold data and hot data are migrated between the DDR and the PMEM. The application scenario is, for another example, a high performance computing (high performance computing, HPC) cluster application scenario: Hot/cold identification is performed on a physical page of an HBM in HPC by using the method, data in an identified hot page is reserved in the HBM, and data in a cold page is stored in a DDR, so that performance of the HBM and the DDR is maximized.

The electronic device 100 shown in FIG. 1 is a device in any application scenario to which the cold/hot physical page identification method provided in this application is applied. For example, the electronic device 100 is a local server, a cloud server, a server in a data center, or another type of computer device. An application scenario and a type of the electronic device 100 are not limited herein in embodiments of this application.

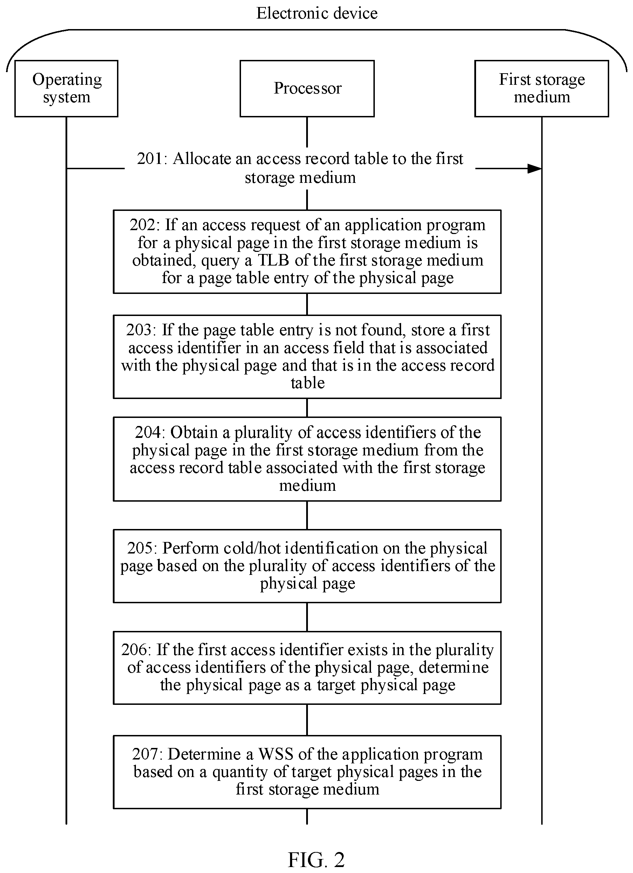

Based on the foregoing application scenario and with reference to a flowchart of a cold/hot physical page identification method according to this application shown in FIG. 2, the method is described as follows.

Step 201: An operating system in an electronic device allocates an access record table to a first storage medium.

The first storage medium is any storage medium (for example, the storage medium in FIG. 1) in the electronic device. The first storage medium includes a plurality of physical pages, the access record table includes a plurality of access fields, and each access field is associated with (corresponds to) one physical page in the first storage medium. For an implementation of the access record table, refer to the foregoing descriptions. The implementation of the access record table is not described herein again.

In a possible implementation, for any application program installed in the electronic device, before the application program is run, the application program applies to the operating system for memory allocation. When receiving the application of the application program, the operating system allocates first storage space in the first storage medium to the application program. In this case, the first storage space includes a plurality of physical pages in the first storage medium. In some other embodiments, the operating system combines second storage space in a plurality of first storage media to form first storage space, and allocates the first storage space to the application program. In this case, the first storage space includes a plurality of physical pages in the plurality of first storage media. A quantity of physical pages in the first storage space and locations of the physical pages are not limited herein in embodiments of this application.

The application program is a computer program for completing one or more specific tasks (tasks). The application program may be a thread-level application program, or may be a thread-level application program, or may be an application program of another level. An execution level of the application program is not limited herein in embodiments of this application.

After allocating the first storage space to the application program, the operating system establishes a page table for the application program based on the physical pages in the first storage space. The page table includes a plurality of page table entries, and each page table entry includes a page number and a page frame number of one physical page in the first storage space. In addition, the operating system further establishes, based on a page number of each physical page in the page table, an access record table associated with the application program. The access record table includes a plurality of access fields, and each access field corresponds to a page number of one physical page, so that each access field is associated with a corresponding physical page. For example, the access record table is a bitmap. Assuming that the first storage space is a physical memory of 64 gigabytes (gigabytes, GB), and a size of the physical page is 64 kilobytes (kilobytes, KB) KB, the operating system allocates a bitmap of 128 KB to the first storage space as the access record table. Each bit in the bitmap is associated with one access field, and each bit is associated with one physical page in the first storage space.

When the access record table is established, the operating system separately records a first access identifier in each access field in the access record table. When the application program subsequently accesses a physical page in the first storage space, a first access identifier in an access field associated with the physical page is updated to a second access identifier. Alternatively, when the access record table is established, the operating system does not record an access identifier in each access field in the access record table. When the application program subsequently accesses a physical page in the first storage space, a second access identifier is added to an access field associated with the physical page.

After the access record table is established, the operating system stores the access record table in a second storage medium, and stores at least one of a storage address or a size of the access record table in a processor that runs the application program. For example, the processor includes a first register and a second register. The operating system stores the storage address of the access record table in the first register, and stores the size of the access record table in the second register, so that the processor subsequently accesses, based on the storage address and/or the size of the access record table, the access record table stored in the second storage medium.

The foregoing is described by using an example in which the first storage space is first allocated to the application program, then the access record table is established for the application program, and the storage address and/or the size of the access record table are/is stored in the processor that runs the application program. In some other embodiments, the operating system combines the physical pages in the first storage medium to form first storage space, does not care about an application program that uses the first storage space, establishes an access record table for the first storage space, and stores a storage address and/or a size of the access record table in at least one processor in the electronic device. Each processor accesses a physical page of the first storage space in a process of running any application program, and the processor adds a second access identifier to an access field that is associated with the physical page and that is in the access record table.

It should be understood that when storage space provided by the first storage medium is allocated to one application program, the operating system allocates, to the first storage medium, an access record table associated with the storage space or the application program. When storage space provided by the first storage medium is allocated to one or more application programs, one sub-storage space in the storage space is allocated to each application program, and the operating system allocates one access record table to each sub-storage space or an application program associated with each sub-storage space.

Step 202: If a processor in the electronic device obtains an access request of the application program for the physical page in the first storage medium, the processor queries a translation lookaside buffer TLB of the first storage medium for a page table entry of the physical page.

The physical page is any to-be-accessed physical page in the first storage space, and the TLB is a cache of a page table in the first storage space. The access request indicates to access second storage space in the physical page (for example, read data or write data). The access request includes a logical address of the second storage space, and the logical address includes a page number of the physical page in which the second storage space is located and a page offset of the second storage space. The page offset indicates an offset of the second storage space in the physical page. The page table entry of the physical page is a page table entry including the page number of the physical page.

In a process of running the application program, if the processor obtains the access request of the application program for any physical page in the first storage space, the processor queries the TLB for the page table entry of the physical page based on the logical address in the access request. For a query process, refer to the example in FIG. 1. Details are not described herein again.

Step 203: If the page table entry is not found, the processor stores a first access identifier in an access field that is associated with the physical page and that is in the access record table, where the first access identifier indicates that the application program has accessed the physical page in a corresponding time period.

The time period is a time period of a current moment (that is, a current time period). A length of the time period is not limited in embodiments of this application.

If the page table entry is not found in the TLB, the processor queries the page table for the page table entry based on the page number of the physical page in the logical address, combines a page frame number in the found page table entry and the page offset in the logical address into a physical address of the second storage space, and accesses the second storage space based on the physical address. It can be learned that after receiving the access request, the processor also accesses the second storage space in the physical page in the current time period by querying the page table. Therefore, if the page table entry is not found in the TLB, the processor stores the first access identifier in the access field that is associated with the physical page and that is in the access record table, to indicate that the application program has accessed the physical page in the current time period.

For a process of storing the first access identifier in the access record table, the processor obtains the storage address of the access record table from the first register, and writes, based on the page number of the physical page, the first access identifier into the access field that is associated with the page number and that is in the storage address. For example, the access record table is a bitmap, and the page number is P. The processor uses the storage address as an initial address of the access record table, and sets a $P^{th}$ bit after the initial address to 1 (in other words, the first access identifier). The $P^{th}$ bit is the access field associated with the physical page.

Alternatively, before writing the first access identifier into the access field, the processor may further obtain the size of the access record table from the second register. If the page number of the physical page is less than or equal to the size of the access record table, the first access identifier is written, based on the page number of the physical page, into the access field that is associated with the page number and that is in the storage address. If the page number of the physical page is greater than the size of the access record table, it indicates that there is no access field that is associated with the physical page and that is in the access record table. Therefore, the first access identifier is not written, based on the page number of the physical page, into the access field that is associated with the page number and that is in the storage address, to avoid unsuccessful writing.

In a possible implementation, if the page table entry is not found in the TLB, the processor queries the page table of the first storage medium for the page table entry. In a process of querying the page table, the processor performs the step of storing the first access identifier in the access field that is associated with the physical page and that is in the access record table, to concurrently perform the process of querying the page table and a process of recording the access identifier in the access record, so as to avoid an additional processing delay generated in a process of accessing the physical page by the processor based on the access request.

It should be understood that, if the page table entry is not found in the TLB this time, the first access identifier is recorded in the access record table for the physical page. In other words, when the application program accesses the physical page for the first time in the current time period, the first access identifier is recorded in the access record table for the physical page. In addition, if the page table entry is not found in the TLB this time, after the page table entry is found in the page table, the processor further loads (or caches) the page table entry to the TLB. If an access request of the application program for the physical page is subsequently obtained, the page table entry of the physical page is found in the TLB. This indicates that the application program has accessed the physical page before, and the processor does not need to record the first access identifier in the access record table for the physical page again.

Step 204: The processor obtains a plurality of access identifiers of the physical page in the first storage medium from the access record table associated with the first storage medium, where the plurality of access identifiers respectively indicate statuses of accessing the physical page by the application program in a plurality of different time periods.

The access record table associated with the first storage medium includes at least one access record table associated with storage space in the first storage medium. For ease of description, in this embodiment of this application, an access record table associated with the first storage space in the first storage medium is used as an example for description below. When the first storage medium is associated with a plurality of access record tables, reference may be made to a processing process of the access record table associated with the first storage space. The plurality of access identifiers correspond to a plurality of time periods, and each access identifier indicates a status of accessing the physical page by the application program in a corresponding time period.

In a possible implementation, the processor obtains an access identifier of the physical page from the access record table at an interval of one time period, so that each access identifier corresponds to each time period. A duration of the time period is, for example, 0.55 seconds, 1 second, or 1.5 seconds. The duration of the time period is not limited herein in embodiments of this application.

For example, the access record table is a bitmap. When cold/hot identification is performed on the physical page, the processor uses a first duration as a read periodicity. Each time the first duration elapses, the processor reads an access identifier stored in the access field that is associated with the physical page and that is in the access record table, in other words, obtains an access identifier of the physical page in a time period including the first duration, and stores the access identifier of the physical page. If the access identifier of the physical page is the first access identifier, it indicates that the application program has accessed the physical page in the time period including the first duration. If the access identifier of the physical page is the second access identifier, it indicates that the application program has not accessed the physical page in the time period including the first duration. In some embodiments, the processor uses a second duration as a cold/hot physical page identification periodicity. In any cold/hot identification periodicity, each time the first duration elapses, the processor reads the access identifier of the physical page from the access record table once. When the cold/hot identification periodicity ends, the processor obtains the plurality of access identifiers of the physical page in different time periods because the second duration is longer than the duration. The second duration may be set based on an actual implementation scenario. The second duration is not limited herein in embodiments of this application.

In addition, each time the first duration elapses, after obtaining an access identifier of the physical page, the processor refreshes the access identifier in the access field associated with the physical page to the second access identifier. For example, if the access identifier in the access field is the first access identifier, the access identifier in the access field is updated to the second access identifier. If the access identifier in the access field is the second access identifier, the second access identifier is not updated, or the second access identifier is written into the access field in an overwrite manner.

If the application program accesses the physical page again in a next first duration, and the processor updates the second access identifier in the access field to the first access identifier, the processor reads the first access identifier from the access field in the next first duration. If the application program has not accessed the physical page in a next first duration, the processor does not update the second access identifier in the access field to the first access identifier. In this way, the access identifier in the access field in the access record table is periodically refreshed, so that read access identifier can indicate whether the application program accesses the physical page in a time period.

Next, a process in which after the access field is refreshed, the processor is triggered to update the access field in the next first duration is described as follows:

The processor corresponds to a plurality of application programs, and one storage space and one access record table are allocated to each application program. The processor executes the plurality of application programs in turn through context switching. A quantity of application programs corresponding to the processor is not limited herein in embodiments of this application.

For ease of description, an example in which the plurality of application programs include a first application program and a second application program is used to describe a process in which the processor executes the first application program and the second application program in turn.

Storage space allocated to the first application program is referred to as first storage space, and storage space allocated to the second application program is referred to as second storage space. An access record table allocated to the first storage space (or the first application program) is referred to as a first access record table, and an access record table allocated to the second storage space (or the second application program) is referred to as a second access record table.

For example, the first application program is switched, in a first context switching periodicity, to the processor for running. When the first context switching periodicity starts, a TLB in the processor is empty. The processor stores a storage address of the first access record table in the first register, and stores a size of the first access record table in the second register. As the processor runs the first application program, the first application program continuously accesses a physical page in the first storage space. For any physical page in the first storage space, because the TLB is empty when the first context switching starts, when the first application program accesses the physical page for first time in the first context switching periodicity, a TLB miss occurs, and the processor is triggered to add a page table entry of the physical page to the TLB, and record a first access identifier of the physical page in the first access record table. When the first context switching periodicity ends, the processor switches the first application program out, and clears the TLB, the first register, and the second register, to enter into a second context periodicity.

In the second context switching periodicity, the second application program is switched to the processor for running. For example, when the second context switching periodicity starts, the processor stores, in the first register, a storage address of the second access record table corresponding to the second application program, and stores a size of the second access record table in the second register. As the processor runs the second application program, the second application program continuously accesses a physical page in the second storage space. Because the TLB is empty when the second context switching periodicity starts, for any physical page in the second storage space, when the second application program accesses the physical page for first time in the second context switching periodicity, the TLB miss occurs, and the processor is triggered to add a page table entry of the physical page to the TLB, and record a first access identifier of the physical page in the second access record table. When the second context switching periodicity ends, the processor switches the second application program out, clears the TLB, the first register, and the second register, enters into a third context periodicity, and switches, in the third context periodicity, the first application program to the processor for running. The rest may be deduced by analogy

When a duration (namely, a third duration) of a context switching periodicity is less than the first duration, two adjacent first durations are used as an example. For any physical page in the first storage space, after a 1st first duration elapses, the processor reads an access identifier of the physical page in the first access record table once, and updates the access identifier of the physical page in the first access record table to the second access identifier. Because the duration of the context switching periodicity is less than the first duration, the processor may execute the first application program at least once in the 1<sup>st</sup> first duration. In a 2<sup>nd</sup> first duration, each time the processor switches to the first application program, the TLB is cleared. The first application program accesses the physical page for first time during running, causing the TLB miss. Therefore, the processor changes the second access identifier of the physical page in the first access record table to the first access identifier.

Step 205: The processor performs cold/hot identification on the physical page based on the plurality of access identifiers of the physical page.

In a possible implementation, the processor identifies the physical page based on a quantity of first access identifiers and a quantity of second access identifiers in the plurality of access identifiers. Examples are shown in the following step 2051 or step 2052.

Step 2051: If the plurality of access identifiers are all first access identifiers, the processor identifies the physical page as a hot page.

If the plurality of access identifiers are all the first access identifiers, it indicates that the application program has accessed the physical page in a plurality of time periods, and the physical page is a physical page frequently accessed by the application program. Therefore, the processor identifies the physical page as the hot page.

For example, the processor compares all the plurality of access identifiers with the first access identifier, to obtain comparison results of the plurality of access identifiers. If all the comparison results of the plurality of access identifiers indicate that the corresponding access identifiers are the same as the first access identifier, it indicates that the plurality of access identifiers are all the first access identifiers, and the processor identifies the physical page as the hot page.

For another example, the access identifier is represented by a bit, the first access identifier is "1", and the second access identifier is "0". The processor performs an AND operation on the plurality of access identifiers to obtain a hot page identification result of the physical page. If the hot page identification result is the first access identifier "1", it indicates that the plurality of access identifiers are all first access identifiers "1", and the processor identifies the physical page as the hot page.

Step 2052: If the plurality of access identifiers are all second access identifiers, the processor identifies the physical page as a cold page.

If the plurality of access identifiers are all the second access identifiers, it indicates that the application program has not accessed the physical page in a plurality of time periods, and the physical page is a physical page that is not frequently accessed by the application program. Therefore, the processor identifies the physical page as the cold page.

For example, the processor compares all the plurality of access identifiers with the second access identifier, to obtain comparison results of the plurality of access identifiers. If all the comparison results of the plurality of access identifiers indicate that the corresponding access identifiers are the same as the second access identifier, it indicates that the plurality of access identifiers are all the second access identifiers, and the processor identifies the physical page as the cold page.

For another example, the access identifier is represented by a bit, the first access identifier is "1", and the second access identifier is "0". The processor separately performs a negation operation on the plurality of access identifiers to obtain a plurality of negated access identifiers (where for example, if an access identifier is the first access identifier "1", a negated access identifier is the second access identifier "0"), and performs an AND operation on the plurality of negated access identifiers to obtain a cold page identification result of the physical page. If the cold page identification result is the first access identifier "1", it indicates that the plurality of access identifiers are all the second access identifiers "0", and the processor identifies the physical page as the hot page.

In another possible implementation, the processor can further determine a working set size (working set size, WSS) of the application program based on the access identifiers of each physical page in the first storage space in the plurality of different time periods, and the WSS indicates a size of storage space required for keeping the application program running normally. Examples are shown in the following step 206 and step 207.

It should be understood that step 206 and step 207 are optional steps, and when the processor has no requirement for the WSS of the application program, the processor does not need to perform step 206 or step 207.

Step 206: If the first access identifier exists in the plurality of access identifiers of the physical page, the processor determines the physical page as a target physical page.

The target physical page is a physical page that has been accessed by the application program in a plurality of time periods, that is, a physical page used by the application program to keep running normally.

For example, for the plurality of access identifiers of the physical page, the processor sequentially compares the plurality of access identifiers with the first access identifier. If any access identifier is the same as the first identifier, it indicates that the first access identifier exists in the plurality of access identifiers, and the processor ends the comparison, and determines the physical page as the target physical page.

For another example, the access identifier is represented by a bit, the first access identifier is "1", and the second access identifier is "0". The processor separately performs an OR operation on the plurality of access identifiers, to obtain a target physical page identification result of the physical page. If the target physical page identification result is the first access identifier "1", it indicates that the first access identifier "1" exists in the plurality of access identifiers, and the processor determines the physical page as the target physical page.

Step 207: The processor determines the WSS of the application program based on a quantity of target physical pages in the first storage medium.

For example, for each physical page in the first storage space, the processor determines, by performing step 204 and step 206, whether each physical page is the target physical page, collects statistics on a quantity of target physical pages in the first storage space, and uses a product of the quantity of target physical pages and a size of a single physical page as the WSS of the application program.

According to the method provided in this embodiment of this application, the plurality of access identifiers of the physical page in the first storage medium in different time periods are obtained from the access record table associated with the first storage medium, and cold/hot identification is performed on each physical page based on the plurality of access identifiers of the physical page. In this way, a cold page and a hot page in the first storage medium do not need to be identified by scanning a page table, and the page table does not need to be locked. Therefore, the method does not affect a process of accessing the first storage medium by the application program, and improves efficiency of accessing the storage medium by the application program. In addition, because the application program does not query the access record table when accessing the storage medium, when the plurality of access identifiers of the physical page are obtained from the access record table, the access record table does not need to be locked. This simplifies a cold/hot physical page identification process, and improves cold/hot physical page identification efficiency. In addition, in related art, when cold/hot identification is performed on a memory, a page table needs to be frequently scanned, and a large quantity of page faults are generated. As a result, scanning progress for the page table is hindered, time consumed for cold/hot identification is increased, and overall performance of an electronic device is further reduced. However, in the method provided in this embodiment of this application, the page table does not need to be scanned, and no page fault is generated, to avoid impact of the page fault on cold/hot identification progress. In this way, time consumed for cold/hot identification is reduced, and overall performance of the electronic device is improved.

Next, the cold/hot physical page identification method that is provided in this application and that is described in FIG. 2 is extended as follows:

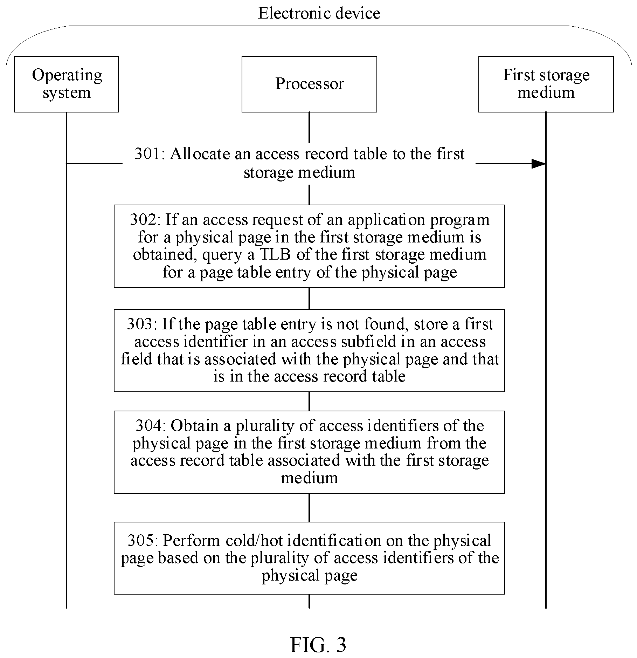

FIG. 2 is described by using an example in which the access record table is a bitmap. In another possible implementation, the access record table is not a bitmap, the access record table includes a plurality of access fields, and each access field is associated with one physical page in the first storage space. To further describe a process of performing cold/hot identification on the physical page based on the access identifier in the access record table, refer to a flowchart of another cold/hot physical page identification method provided in this application shown in FIG. 3.

Step 301: An operating system in an electronic device allocates an access record table to a first storage medium.

Step 301 is similar to step 201. A difference between step 301 and step 201 lies in that in step 301, the access record table allocated to the first storage medium includes a plurality of access fields, each access field is associated with one physical page in first storage space, each access field includes a plurality of access subfields, each access field includes a plurality of bits, and each access subfield corresponds to one time period in a same cold/hot identification periodicity. Each access subfield includes at least one bit, and the at least one bit is used to record an access identifier. Each access field in the access record table in step 201 includes one bit.

Step 302: If a processor in the electronic device obtains an access request of an application program for a physical page in the first storage medium, the processor queries a TLB of the first storage medium for a page table entry of the physical page.

Step 302 is similar to step 202. Step 302 is not described herein again in this embodiment of this application.

Step 303: If the page table entry is not found, the processor stores a first access identifier in an access subfield in an access field that is associated with the physical page and that is in the access record table, where the first access identifier indicates that the application program has accessed the physical page in a corresponding time period.

In a possible implementation, a cold/hot physical page identification periodicity includes a plurality of time periods, and each time period corresponds to one access subfield in the access field associated with the physical page. Based on this, for any one of the plurality of time periods in each cold/hot physical page identification periodicity, if the access request of the application program for the physical page is obtained in the time period, and the page table entry of the physical page is not found in the TLB based on the access request, the processor stores the first access identifier in an access subfield that is corresponding to the time period and that is in the access field associated with the physical page, to indicate that the application program has accessed the physical page in the time period. If the access request of the application program for the physical page is obtained in the time period, and the page table entry of the physical page is found in the TLB based on the access request, the processor does not record the first access identifier in an access subfield corresponding to the time period.

In addition, when the access record table is allocated to the first storage medium, a second access identifier may have been stored in each access subfield in the access record table, or each access subfield may be empty.

When the access record table is allocated, if the second access identifier has been stored in each access subfield, the processor updates the second access identifier in the access subfield to the first access identifier when storing the first access identifier in the access subfield corresponding to the time period. When the cold/hot identification periodicity ends, each of the plurality of access subfields in the access field associated with the physical page has an access identifier.

When the access record table is allocated, if each access subfield is empty, for any one of the plurality of time periods in each cold/hot physical page identification periodicity, when the time period ends, if an access subfield corresponding to the time period is still empty, the processor stores the second access identifier in the access subfield, to indicate that the application program has not accessed the physical page in the time period, so that when the cold/hot identification periodicity ends, each of the plurality of access subfields in the access field associated with the physical page has an access identifier.

Based on the access record table, for each time period in the cold/hot identification periodicity, when a TLB miss occurs on any physical page in the first storage space in the time period, the processor writes the first access identifier into an access subfield that is corresponding to the time period and that is in an access field that is associated with the physical page and that is in the access record table. In the cold/hot identification periodicity, the processor does not need to refresh each access field in the access record table, and the processor also does not need to read the access record table once each time one time period elapses. When the cold/hot identification periodicity ends, the processor may read a plurality of access identifiers of the physical page from the access field that is associated with the physical page and that is in the access record table, and clears each access identifier in the access field or writes the second access identifier into each access subfield in the access field. This reduces a quantity of times that the processor reads the access record table and a quantity of times that the access record table is refreshed.

Step 304: The processor obtains a plurality of access identifiers of the physical page in the first storage medium from the access record table associated with the first storage medium, where the plurality of access identifiers respectively indicate statuses of accessing the physical page by the application program in a plurality of different time periods.

For any cold/hot physical page identification periodicity, when the cold/hot identification periodicity ends, each of the plurality of access subfields in the access field associated with the physical page has an access identifier, and the processor reads the access field that is associated with the physical page and that is in the access record table, to separately read the access identifier of the physical page from the plurality of access subfields of the access field.

Step 305: The processor performs cold/hot identification on the physical page based on the plurality of access identifiers of the physical page.

Step 305 is similar to step 205. Step 305 is not described herein again in this embodiment of this application. In some other embodiments, after step 305, the processor may alternatively perform step 206 and step 207, to determine a WSS of the application program.

According to the method provided in FIG. 3, the plurality of access identifiers of the physical page in the first storage medium in different time periods are obtained from the access record table associated with the first storage medium, and cold/hot identification is performed on each physical page based on the plurality of access identifiers of the physical page. In this way, a cold page and a hot page in the first storage medium do not need to be identified by scanning a page table, and the page table does not need to be locked. Therefore, the method does not affect a process of accessing the first storage medium by the application program, and improves efficiency of accessing the storage medium by the application program.

Certainly, the access record table may alternatively be a table of a data structure other than the bitmap and the access record table described in FIG. 3, provided that the access record table is a table other than the page table and can record the access identifiers of the physical page in different time periods. A data structure of the access record table is not limited herein in this application.

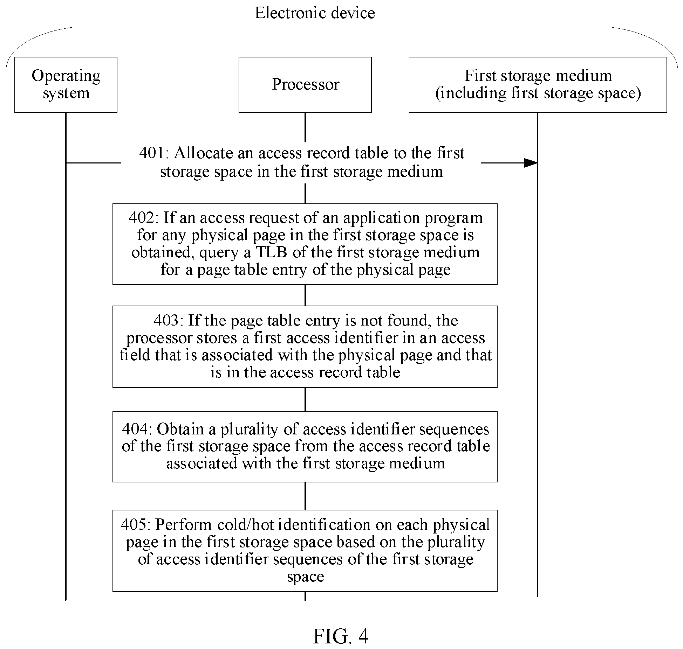

FIG. 2 and FIG. 3 both describe that cold/hot identification is performed on any physical page in the first storage space. In some other embodiments, the first storage space is used as a unit, and the processor performs cold/hot identification in the first storage space, to identify a cold page and/or a hot page in the first storage space. For further descriptions of the process, refer to a flowchart of another cold/hot physical page identification method provided in this application shown in FIG. 4.

Step 401: An operating system in an electronic device allocates an access record table to first storage space in a first storage medium.

Step 401 is similar to step 201 or step 201. Step 401 is not described herein again in this embodiment of this application.

Step 402: If a processor in the electronic device obtains an access request of an application program for any physical page in the first storage space, the processor queries a TLB of the first storage medium for a page table entry of the physical page.

Step 402 is similar to step 202. Step 402 is not described herein again in this embodiment of this application.

Step 403: If the page table entry is not found, the processor stores a first access identifier in an access field that is associated with the physical page and that is in the access record table, where the first access identifier indicates that the application program has accessed the physical page in a corresponding time period.

Step 403 is similar to step 202 or step 303. Step 403 is not described herein again in this embodiment of this application.

Step 404: The processor obtains a plurality of access identifier sequences of the first storage space from the access record table associated with the first storage medium, where the plurality of access identifier sequences respectively indicate statuses of accessing each physical page in the first storage space by the application program in a plurality of different time periods.

Each access identifier sequence corresponds to one of the plurality of different time periods, and each access identifier sequence indicates a status of accessing each physical page in the first storage space by the application program in a corresponding time period. For example, each access identifier sequence includes an access identifier of each physical page in the first storage space in a corresponding time period.

For example, the access record table is a bitmap, and a second duration is a cold/hot identification periodicity of the first storage space. In any cold/hot identification periodicity, each time first duration (that is, one time period) elapses, the processor reads an access identifier stored in each access field in the access record table associated with the first storage space, to obtain an access identifier sequence.

Because the second duration is longer than the first duration, when the cold/hot identification periodicity ends, the processor reads a plurality of access identifier sequences, for example, an access identifier sequence B1 to an access identifier sequence Bn. Each access identifier sequence in the access identifier sequence B1 to the access identifier sequence Bn may also be represented as Bi, and the access identifier sequence Bi includes each access identifier read from the access record table after an $i^{th}$ duration elapses in the cold/hot identification periodicity. i is an integer greater than or equal to 1 and less than or equal to n, and n is an integer greater than 1.

It is assumed that the plurality of access identifier sequences include the access identifier sequence B1 to the access identifier sequence Bn, each access identifier sequence in the access identifier sequence B1 to the access identifier sequence Bn may also be represented as Bi, and the access identifier sequence Bi includes each access identifier read from the access record table after the $i^{th}$ duration elapses in the cold/hot identification periodicity. i is an integer greater than or equal to 1 and less than or equal to n, n is an integer greater than 1, and a value of n depends on a multiple of the cold/hot identification periodicity relative to the first duration. The value of n is not limited herein in this embodiment of this application.

For example, the access record table includes a plurality of access fields, and each access field includes a plurality of access subfields. When a cold/hot identification periodicity ends, the processor reads, to a same access identifier sequence, access identifiers stored in access subfields that are at a same location and that are in the plurality of access fields, so that the access identifier sequence includes access identifiers of physical pages in the first storage space in a same time period. For example, the processor separately reads access identifiers from a $1^{st}$ access field in the plurality of access fields, and combines the read access identifiers to form an access sequence. In this case, the access sequence includes access identifiers of physical pages in the first storage space in a $1^{st}$ time period in the cold/hot identification periodicity.

Step 405: The processor performs cold/hot identification on each physical page in the first storage space based on the plurality of access identifier sequences of the first storage space.

After the access identifier sequence B1 to the access identifier sequence Bn are obtained, the processor inputs the access identifier sequence B1 to the access identifier sequence Bn into the following formula (1), and performs a bitwise AND operation on the access identifier sequence B1 to the access identifier sequence Bn by using the formula (1), to obtain a hot page identification result sequence. The hot page identification result sequence includes hot page identification results of the physical pages in the first storage space. If a hot page identification result of any physical page is a first access identifier "1", the physical page is identified as a hot page.

$$\text{Formula (1): Hot page identification result sequence} = B1\&B2...Bi...\&Bn$$

"&" indicates an AND operation.

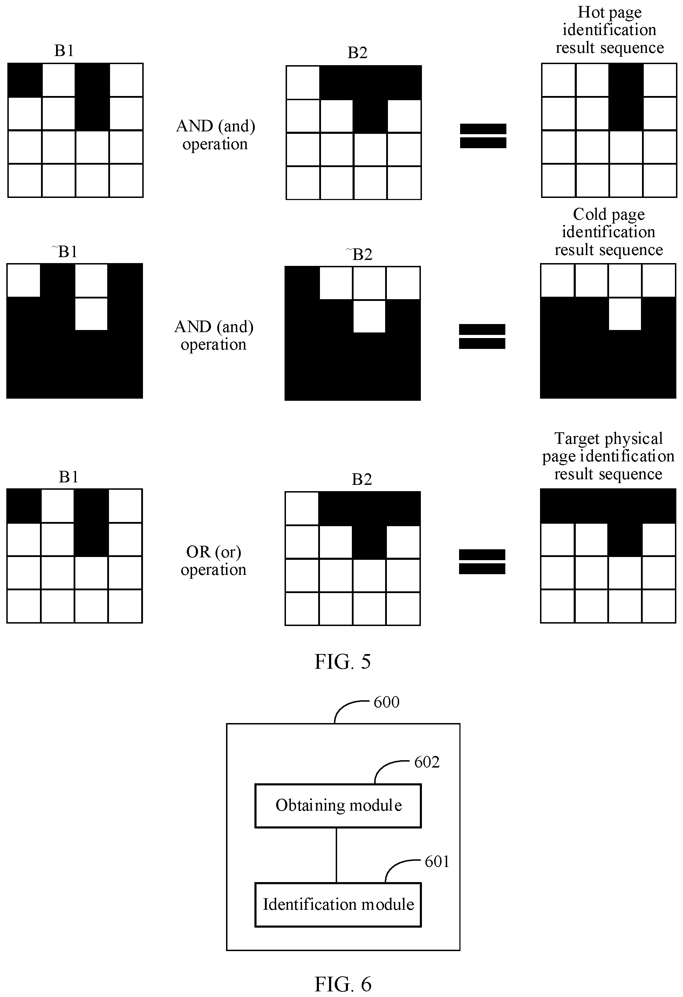

For example, FIG. 5 is a diagram of a computing logic principle of cold/hot physical page identification according to this application. It is assumed that n=2, the access record table includes 4*4 bits, and each bit in FIG. 5 is represented by a small block. A bitwise AND operation is performed on the read access identifier sequence B1 and the read access identifier sequence B2, to obtain a hot page identification result sequence shown in FIG. 5. Each small black block shown in FIG. 5 indicates that one bit is the first access identifier "1", and each small white block indicates that one bit is a second access identifier "0".

After the access identifier sequence B1 to the access identifier sequence Bn are obtained, the processor inputs the access identifier sequence B1 to the access identifier sequence Bn into the following formula (2), performs a bitwise negation operation on the access identifier sequence B1 to the access identifier sequence Bn by using the formula (2), and performs a bitwise AND operation on a negated access identifier sequence B1 to a negated access identifier sequence Bn, to obtain a cold page identification result sequence. The cold page identification result sequence includes cold page identification results of the physical pages in the first storage space. If a cold page identification result of any physical page is the second access identifier "0", the physical page is identified as a hot page.

$$\text{Formula (2): Cold page identification result sequence} = {\sim}B1\&{\sim}B2...{\sim}Bi...\&{\sim}Bn$$

~Bi is an access identifier sequence Bi obtained through bitwise negation, and "~" indicates a negation operation.

FIG. 5 is used as an example. After bitwise negation is performed on the access identifier sequence B1 and the access identifier sequence B2, an access identifier sequence ~B1 and an access identifier sequence ~B2 are obtained. Then, a bitwise AND operation is performed on the access identifier sequence ~B1 and the access identifier sequence ~B2 to obtain a cold page identification result sequence shown in FIG. 3.

In some other embodiments, after step 405, the processor may alternatively determine a WSS of the application program based on the plurality of access identifier sequences. For example, when the access identifier sequence B1 to the access identifier sequence Bn are obtained, the processor inputs the access identifier sequence B1 to the access identifier sequence Bn into the following formula (3), and performs a bitwise OR operation on the access identifier sequence B1 to the access identifier sequence Bn by using the formula (3), to obtain a target physical page result sequence. The target physical page identification result sequence includes target physical page identification results of the physical pages in the first storage space. If a target object page identification result of any physical page is the first access identifier "1", the physical page is a target physical page. Therefore, the WSS of the application program is calculated by collecting statistics on a quantity of first access identifiers in the target physical page result sequence, and using the quantity of first access identifiers as a quantity of target physical pages in the first storage space.

$$\text{Formula (3): Target physical page identification result sequence} = B1|B2...Bi...|Bn$$

"|" indicates an OR operation.

FIG. 5 is used as an example. After an OR operation is performed on the access identifier sequence B1 and the access identifier sequence B2, a target physical page identification result sequence shown in FIG. 5 is obtained.

According to the method provided in FIG. 4, cold/hot identification can be performed in the first storage space allocated to the application program, to identify a hot page and/or a cold page in the first storage space, and the cold page and the hot page in the first storage space do not need to be identified by scanning a page table, and the page table does not need to be locked. Therefore, a process of accessing the first storage space by the application program is not affected, and efficiency of accessing the first storage space by the application program is improved. In addition, because the application program does not query the access record table when accessing the first storage space, when the plurality of access identifiers of the physical page are obtained from the access record table, the access record table does not need to be locked. This simplifies a cold/hot identification process in the first storage space, and improves cold/hot identification efficiency in the first storage space.

In addition, at least one of the method embodiments shown in FIG. 2 to FIG. 4 may alternatively be randomly combined. A combination solution is not described herein in this application.

The foregoing describes the cold/hot physical page identification method provided in this application. The following further describes, with reference to the accompanying drawings, an apparatus and a chip provided in this application. It should be understood that the apparatus and the chip described below may implement any function of the processor or a part of the processor in any one of the foregoing methods.

FIG. 6 is a diagram of a structure of a cold/hot physical page identification apparatus according to this application. As shown in FIG. 6, the apparatus 600 may be the processor or a part of the processor in the foregoing embodiments, and is configured to perform the cold/hot physical page identification method performed by the processor. The apparatus 600 includes:

an obtaining module 601, configured to obtain a plurality of access identifiers of a physical page in a first storage medium from an access record table associated with the first storage medium, where the plurality of access identifiers respectively indicate statuses of accessing the physical page by an application program in a plurality of different time periods; and

an identification module 602, configured to perform cold/hot identification on the physical page based on the plurality of access identifiers.

It should be understood that the apparatus 600 in this embodiment of this application may be implemented by using a CPU, may be implemented by using an application-specific integrated circuit (application-specific integrated circuit, ASIC), or may be implemented by using a programmable logic device (programmable logic device, PLD). The PLD may be a complex program logical device (complex programmable logical device, CPLD), a field programmable gate array (field programmable gate array, FPGA), a generic array logic (generic array logic, GAL), a data processing unit (data processing unit, DPU), a system on chip (system on chip, SoC), or any combination thereof. The apparatus 600 may also implement the methods shown in FIG. 2 to FIG. 4 by using software. When the methods are implemented by using the software, the apparatus 600 and the modules of the apparatus 600 may also be software modules.

In a possible implementation, the identification module 602 is configured to:

if the plurality of access identifiers are all first access identifiers, identify the physical page as a hot page, where the first access identifier indicates that the application program has accessed the physical page in a corresponding time period; or
if the plurality of access identifiers are all second access identifiers, identify the physical page as a cold page, where the second access identifier indicates that the application program has not accessed the physical page in a corresponding time period.

In another possible implementation, the apparatus 600 further includes:
a determining module, configured to: if the first access identifier exists in the plurality of access identifiers, determine the physical page as a target physical page.

The determining module is further configured to determine a working set size WSS of the application program based on a quantity of target physical pages in the first storage medium.

In another possible implementation, the obtaining module 601 is configured to:
obtain an access identifier of the physical page from the access record table at an interval of one time period.

In another possible implementation, the access record table includes an access field associated with the physical page, and the apparatus 600 further includes:
a refresh module, configured to refresh an access identifier in the access field to the second access identifier, where the second access identifier indicates that the application program has not accessed the physical page in a corresponding time period.

In another possible implementation, the access field is a bit, or the access field includes a plurality of access subfields, and the access subfield is used to store a status of accessing the physical page by the application program in a corresponding time period.

In another possible implementation, the access record table includes an access field associated with the physical page, and the apparatus 600 further includes:

a query module, configured to: if an access request of the application program for the physical page is obtained, query a translation lookaside buffer TLB of the first storage medium for a page table entry of the physical page; and
a recording module, configured to: if the page table entry is not found, store the first access identifier in the access field in the access record table, where the first access identifier indicates that the application program has accessed the physical page in a corresponding time period.

In another possible implementation, the apparatus 600 further includes:
the recording module, further configured to: if the page table entry is not found, query a page table of the first storage medium for the page table entry, and in a process of querying the page table, perform the step of storing the first access identifier in the access field in the access record table.

In another possible implementation, the access record table is associated with first storage space in the first storage medium, and the obtaining module 601 is configured to obtain a plurality of access identifier sequences of the first storage space from the access record table, where the plurality of access identifier sequences respectively indicate statuses of accessing each physical page in the first storage space by the application program in a plurality of different time periods.

The identification module 602 is configured to perform cold/hot identification on each physical page in the first storage space based on the plurality of access identifier sequences.

In another possible implementation, the access record table is stored in a second storage medium, and at least one of a storage address or a size of the access record table is stored in a processor that runs the application program.

All the foregoing possible implementation solutions may be randomly combined to form optional embodiments of this application. Details are not described herein again.

It should be understood that the apparatus 600 corresponds to the processor in the foregoing method embodiments, and the modules in the apparatus 600 and the foregoing other operations and/or functions are respectively for implementing the steps and methods implemented by the processor in the method embodiments. For specific details, refer to the foregoing method embodiments. For brevity, details are not described herein again.

It should be understood that when the apparatus 600 performs cold/hot identification on the physical page, division of the foregoing functional modules is merely used as an example for description. In actual application, the foregoing functions may be allocated to different functional modules for implementation as required. In other words, an internal structure of the apparatus 600 is divided into different functional modules to implement all or some of the functions described above. In addition, the apparatus 600 provided in the foregoing embodiment and the foregoing method embodiments fall within the same conception. For a specific implementation process, refer to the foregoing method embodiments. Details are not described herein again.

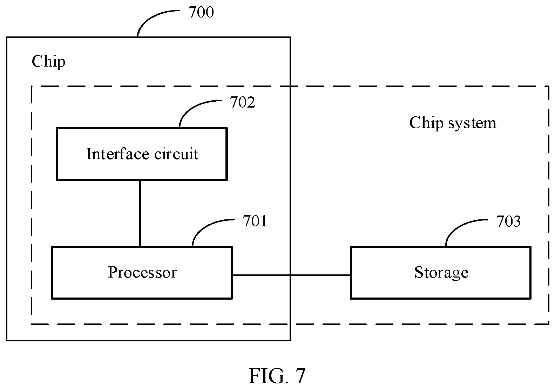

FIG. 7 is a diagram of a structure of a chip according to this application. As shown in FIG. 7, the chip 700 includes a processor 701 and an interface circuit 702. The interface circuit 702 is configured to receive an instruction and transmit the instruction to the processor 701. The processor 701 may be, for example, a specific implementation form of an apparatus 700 or an apparatus 800, and may be configured to perform the foregoing data processing method. The processor 701 is coupled to a storage 703. The storage 703 is configured to store program code. When the program code is executed by the processor 701, a chip system including the processor 701, the interface circuit 702, and the storage 703 is enabled to implement the operation steps of the method in any one of the method embodiments in FIG. 2 to FIG. 4.

Optionally, there is at least one processor 701 in the chip system. It should be understood that in this embodiment of this application, the processor 701 may be a CPU or another general-purpose processor, or the processor 701 may be one or more integrated circuits configured to implement the solutions of this application, for example, a digital signal processor (digital signal processor, DSP), an ASIC, a PLD, an FPGA or another programmable logic device, a discrete gate or transistor logic device, or a discrete hardware component. The general-purpose processor may be a microprocessor or any conventional processor or the like.

Optionally, there may be one or more storages 703 in the chip system. The storage 703 may be integrated with the processor 701, or may be disposed separately from the processor 701. This is not limited in this application. For example, the storage 703 and the processor 701 may be integrated into a same chip. As shown in FIG. 7, the storage 703 and the processor 701 may be separately disposed on different chips. A type of the storage 703 and a manner of disposing the storage 703 and the processor 701 are not specifically limited in this application.

The storage 703 may include a read-only memory and a random access memory, and provide an instruction and data for the processor 701. The storage 703 may further include a non-volatile random access memory. For example, the storage 703 may further store information about a device type. The storage 703 may alternatively be a volatile memory, or may include both a volatile memory and a non-volatile memory.

The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example, but not limitation, many forms of RAMs are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the chip system may be an FPGA, an ASIC, a SoC, a CPU, a network processor (network processor, NP), a digital signal processing circuit (digital signal processor, DSP), a micro controller unit (micro controller unit, MCU), a PLD, or another integrated chip.

This application further provides a computer-readable storage medium, for example, a storage including program code. The program code may be executed by a processor in an electronic device (or a chip), to complete the cold/hot physical page identification method in the foregoing embodiments. For an implementation of the computer-readable storage medium, refer to the storage 703 in FIG. 7.

This application further provides a computer program product or a computer program. The computer program product or the computer program includes program code. The program code is stored in a computer-readable storage medium. A processor reads the program code from the computer-readable storage medium, and the processor executes the program code, so that a chip in which the processor is located or an electronic device performs the foregoing cold/hot physical page identification method.

In addition, this application further provides an apparatus. The apparatus may be specifically a chip, a component, or a module. The apparatus may include a processor and a storage that are connected. The storage is configured to store computer-executable instructions. When the apparatus runs, the processor may execute the computer-executable instructions stored in the storage, to enable the chip to perform the cold/hot physical page identification method in the foregoing method embodiments.

The apparatus, the device, the computer-readable storage medium, the computer program product, or the chip provided in this application are all configured to perform the corresponding method provided above. Therefore, for beneficial effects that can be achieved, refer to the beneficial effects of the corresponding methods provided above. Details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive (solid-state drive, SSD).

The foregoing descriptions are merely optional embodiments of this application, but are not intended to limit this application. Any modification, equivalent replacement, or improvement made without departing from the spirit and principle of this application should fall within the protection scope of this application.

**Claims**

1. A cold/hot physical page identification method, wherein the method comprises:

    obtaining a plurality of access identifiers of a physical page in a first storage medium from an access record table associated with the first storage medium, wherein the plurality of access identifiers respectively indicate statuses of accessing the physical page by an application program in a plurality of different time periods; and
    performing cold/hot identification on the physical page based on the plurality of access identifiers.

2. The method according to claim 1, wherein the performing cold/hot identification on the physical page based on the plurality of access identifiers comprises:

    if the plurality of access identifiers are all first access identifiers, identifying the physical page as a hot page, wherein the first access identifier indicates that the application program has accessed the physical page in a corresponding time period; or
    if the plurality of access identifiers are all second access identifiers, identifying the physical page as a cold page, wherein the second access identifier indicates that the application program has not accessed the physical page in a corresponding time period.

3. The method according to claim 2, wherein after the obtaining a plurality of access identifiers of a physical page in a first storage medium from an access record table associated with the first storage medium, the method further comprises:

    if the first access identifier exists in the plurality of access identifiers, determining the physical page as a target physical page; and
    determining a working set size WSS of the application program based on a quantity of target physical pages in the first storage medium.

4. The method according to any one of claims 1 to 3, wherein the obtaining a plurality of access identifiers of a physical page in a first storage medium from an access record table associated with the first storage medium comprises:
   obtaining an access identifier of the physical page from the access record table at an interval of one time period.

5. The method according to claim 4, wherein the access record table comprises an access field associated with the physical page, and after the obtaining an access identifier of the physical page from the access record table at an interval of one time period, the method further comprises:
   refreshing an access identifier in the access field to the second access identifier, wherein the second access identifier indicates that the application program has not accessed the physical page in a corresponding time period.

6. The method according to claim 4, wherein the access field is a bit, or the access field comprises a plurality of access subfields, and the access subfield is used to store a status of accessing the physical page by the application program in a corresponding time period.

7. The method according to any one of claims 1 to 3, claim 5, or claim 6, wherein the access record table comprises the access field associated with the physical page, and the method further comprises:

if an access request of the application program for the physical page is obtained, querying a translation lookaside buffer TLB of the first storage medium for a page table entry of the physical page; and
if the page table entry is not found, storing the first access identifier in the access field in the access record table, wherein the first access identifier indicates that the application program has accessed the physical page in a corresponding time period.

8. The method according to claim 7, wherein after the querying a translation lookaside buffer TLB of the first storage medium for a page table entry of the physical page, the method further comprises:
if the page table entry is not found, querying a page table of the first storage medium for the page table entry, and in a process of querying the page table, performing the step of storing the first access identifier in the access field in the access record table.

9. The method according to any one of claims 1 to 3, claims 5 and 6, or claim 8, wherein the access record table is associated with first storage space in the first storage medium, and the obtaining a plurality of access identifiers of a physical page in a first storage medium from an access record table associated with the first storage medium comprises:

obtaining a plurality of access identifier sequences of the first storage space from the access record table, wherein the plurality of access identifier sequences respectively indicate statuses of accessing each physical page in the first storage space by the application program in a plurality of different time periods; and
the performing cold/hot identification on the physical page based on the plurality of access identifiers comprises:
performing cold/hot identification on each physical page in the first storage space based on the plurality of access identifier sequences.

10. The method according to any one of claims 1 to 3, claims 5 and 6, or claim 8, wherein the access record table is stored in a second storage medium, and at least one of a storage address or a size of the access record table is stored in a processor that runs the application program.

11. A cold/hot physical page identification apparatus, wherein the apparatus comprises:

an obtaining module, configured to obtain a plurality of access identifiers of a physical page in a first storage medium from an access record table associated with the first storage medium, wherein the plurality of access identifiers respectively indicate statuses of accessing the physical page by an application program in a plurality of different time periods; and
an identification module, configured to perform cold/hot identification on the physical page based on the plurality of access identifiers.

12. A chip, wherein the chip comprises a processor, and the processor is configured to execute at least one piece of program code, so that the chip performs the method according to any one of claims 1 to 10.

13. A computer-readable storage medium, wherein the storage medium stores at least one piece of program code, and the at least one piece of program code is read by a processor, so that a chip performs the method according to any one of claims 1 to 10.

EP 4 567 609 A1

**100**

Logical address

101

CPU → P | D

Page number    Page frame number

104

TLB Bit

TLB

102

Storage medium

Set a corresponding bit in an access record table based on a page number of a physical page

TLB miss

105    51

Access record table

| 0 | 0 | 0 | 0 | 0 | 0 | 0 | 0 |
| 0 | 0 | 1 | 0 | 0 | 1 | 0 | 0 |
| 0 | 0 | 0 | 0 | 0 | 0 | 0 | 0 |
| 0 | 0 | 0 | 0 | 0 | 0 | 0 | 0 |
| 0 | 1 | 0 | 0 | 0 | 0 | 1 | 0 |
| 0 | 0 | 1 | 0 | 0 | 1 | 0 | 0 |
| 0 | 0 | 0 | 1 | 1 | 0 | 0 | 0 |
| 0 | 0 | 0 | 0 | 0 | 0 | 0 | 0 |

F | D

Page number    Page frame number

103

F

Page table

FIG. 1

Electronic device

| Operating system | Processor | First storage medium |
|---|---|---|

201: Allocate an access record table to the first storage medium

202: If an access request of an application program for a physical page in the first storage medium is obtained, query a TLB of the first storage medium for a page table entry of the physical page

203: If the page table entry is not found, store a first access identifier in an access field that is associated with the physical page and that is in the access record table

204: Obtain a plurality of access identifiers of the physical page in the first storage medium from the access record table associated with the first storage medium

205: Perform cold/hot identification on the physical page based on the plurality of access identifiers of the physical page

206: If the first access identifier exists in the plurality of access identifiers of the physical page, determine the physical page as a target physical page

207: Determine a WSS of the application program based on a quantity of target physical pages in the first storage medium

FIG. 2

Electronic device

| Operating system | Processor | First storage medium |
|---|---|---|

301: Allocate an access record table to the first storage medium

302: If an access request of an application program for a physical page in the first storage medium is obtained, query a TLB of the first storage medium for a page table entry of the physical page

303: If the page table entry is not found, store a first access identifier in an access subfield in an access field that is associated with the physical page and that is in the access record table

304: Obtain a plurality of access identifiers of the physical page in the first storage medium from the access record table associated with the first storage medium

305: Perform cold/hot identification on the physical page based on the plurality of access identifiers of the physical page

FIG. 3

Electronic device

| Operating system | Processor | First storage medium (including first storage space) |
|---|---|---|

401: Allocate an access record table to the first storage space in the first storage medium

402: If an access request of an application program for any physical page in the first storage space is obtained, query a TLB of the first storage medium for a page table entry of the physical page

403: If the page table entry is not found, the processor stores a first access identifier in an access field that is associated with the physical page and that is in the access record table

404: Obtain a plurality of access identifier sequences of the first storage space from the access record table associated with the first storage medium

405: Perform cold/hot identification on each physical page in the first storage space based on the plurality of access identifier sequences of the first storage space

FIG. 4

B1

AND (and)
operation

B2

Hot page
identification
result sequence

~B1

AND (and)
operation

~B2

Cold page
identification
result sequence

B1

OR (or)
operation

B2

Target physical
page identification
result sequence

FIG. 5

600

602

Obtaining module

601

Identification module

FIG. 6

700

Chip

702

Interface circuit

701

Processor

Chip system

703

Storage

FIG. 7

## INTERNATIONAL SEARCH REPORT

| International application No. |
|---|
| **PCT/CN2023/103831** |

| A. | CLASSIFICATION OF SUBJECT MATTER |
|---|---|

G06F12/1009(2016.01)i; G06F12/1027(2016.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

CNABS, CNTXT, DWPI, WPABS, ENTXT, CNKI, 万方, WANFANG, IEEE: 物理的, 内存, 页, 冷, 热,识别, 访问, 记录, 表, 比特, 时间, 时间段, 工作集, 大小, 字段, 关联, 查询, physical, memory, page, cold, hot, identify, access, record, table, form, bit, time, interval, workset, working set, size, field, associated, related, query

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114579404 A (ALIBABA (CHINA) CO., LTD.) 03 June 2022 (2022-06-03) description, paragraphs 36-190, and figures 1-5 | 1-13 |
| A | CN 110865869 A (PEKING UNIVERSITY) 06 March 2020 (2020-03-06) entire document | 1-13 |
| A | CN 102902628 A (RAMAXEL TECHNOLOGY (SHENZHEN) CO., LTD.) 30 January 2013 (2013-01-30) entire document | 1-13 |
| A | CN 112181870 A (CHONGQING UNIVERSITY) 05 January 2021 (2021-01-05) entire document | 1-13 |
| A | CN 104951403 A (UNIVERSITY OF SCIENCE AND TECHNOLOGY OF CHINA) 30 September 2015 (2015-09-30) entire document | 1-13 |
| A | US 2012011504 A1 (VMWARE INC.) 12 January 2012 (2012-01-12) entire document | 1-13 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2023** | **19 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/103831** |

| Patent document cited in search report | | | Publication date (day/month/year) | Patent family member(s) | | | Publication date (day/month/year) |
| --- | --- | --- | --- | --- | --- | --- | --- |
| CN | 114579404 | A | 03 June 2022 | None | | | |
| CN | 110865869 | A | 06 March 2020 | CN | 110865869 | B | 03 May 2022 |
| CN | 102902628 | A | 30 January 2013 | CN | 102902628 | B | 01 June 2016 |
| CN | 112181870 | A | 05 January 2021 | CN | 112181870 | B | 28 October 2022 |
| CN | 104951403 | A | 30 September 2015 | CN | 104951403 | B | 30 January 2018 |
| US | 2012011504 | A1 | 12 January 2012 | US | 9032398 | B2 | 12 May 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211180232
- CN 202211431336